# EUROPEAN PATENT APPLICATION

(11) **EP 4 380 274 A1**
(43) Date of publication of application: **05.06.2024**
(21) Application number: 22848586.8
(22) Date of filing: 27.07.2022
(51) Int. Cl.: H04W 72/04, H04W 74/08

(54) **COMMUNICATION METHOD AND APPARATUS, AND TERMINAL, BASE STATION AND STORAGE MEDIUM**

(30) Priority: 27.07.2021 CN 202110853153
(71) Applicant: China Mobile Communication Co., Ltd Research Institute, Beijing 100053 (CN); CHINA MOBILE COMMUNICATIONS GROUP CO., LTD., Beijing 100032 (CN)
(72) Inventor: CHEN, Ningyu, Beijing 100053 (CN); TAN, Jiayao, Beijing 100053 (CN)
(74) Representative: Maiwald GmbH
(86) International application number: PCT/CN2022/108276
(87) International publication number: WO 2023/005981

(57) **Abstract**

Disclosed in the present application are a communication method and apparatus, and a terminal, a base station and a storage medium. The method comprises: a terminal receiving at least two sets of configurations that are sent by a base station, wherein each of the at least two sets of configurations includes carrier information or BWP information, which represents a carrier or a BWP configured by a network side for a specific terminal, a specific slice or a specific service for performing random access.

## Description

### CROSS REFERENCE TO RELATED APPLICATION

This application is based on and claims priority to Chinese patent application No. 202110853153.0, filed on July 27, 2021, the entire contents of which are incorporated herein by reference.

### TECHNICAL FIELD

The disclosure relates to a field of wireless technologies, in particular to a communication method, a communication apparatus, a terminal, a base station and a storage medium.

### BACKGROUND

In a random access process, a terminal completes random access according to random access resources configured by a network side. In the related art, terminals with different capabilities inevitably encounter random access collisions during the random access process, which affects the communication efficiency of the terminal.

### SUMMARY

In order to solve related technical problems, the embodiments of the disclosure provide a communication method, a communication apparatus, a terminal, a base station and a storage medium.

The technical solutions of the embodiments of the disclosure are realized in the following ways.

A communication method is provided in an embodiment of the disclosure, which is applied to a terminal. The method includes:
receiving at least two groups of configurations sent by a base station; in which
each of the at least two groups of configurations include carrier information or bandwidth part (BWP) information representing a carrier or a BWP configured by a network side for a specific terminal for a communication, a specific slice, or a specific service.

A communication method is further provided in an embodiment of the disclosure, which is applied to a base station. The method includes:
sending at least two groups of configurations; in which
each of the at least two groups of configurations include carrier information or BWP information representing a carrier or a BWP configured by a network side for a specific terminal for a communication, a specific slice, or a specific service.

A communication apparatus is further provided in an embodiment of the disclosure. The apparatus includes:
a first receiving unit, configured to receive at least two groups of configurations sent by a base station; in which
each of the at least two groups of configurations include carrier information or BWP information representing a carrier or a BWP configured by a network side for a specific terminal for a communication, a specific slice, or a specific service.

A communication apparatus is further provided in an embodiment of the disclosure. The apparatus includes:
a first sending unit, configured to send at least two groups of configurations; in which
each of the at least two groups of configurations include carrier information or BWP information representing a carrier or a BWP configured by a network side for a specific terminal for a communication, a specific slice, or a specific service.

A terminal is further provided in an embodiment of the disclosure. The terminal includes: a first processor and a first communication interface; in which
the first communication interface is configured to receive at least two groups of configurations sent by a base station; in which
each of the at least two groups of configurations include carrier information or BWP information representing a carrier or a BWP configured by a network side for a specific terminal for a communication, a specific slice, or a specific service.

A base station is further provided in an embodiment of the disclosure. The base station includes: a second processor and a second communication interface; in which
the second communication interface is configured to send at least two groups of configurations; in which
each of the at least two groups of configurations include carrier information or BWP information representing a carrier or a BWP configured by a network side for a specific terminal for a communication, a specific slice, or a specific service.

A terminal is further provided in an embodiment of the disclosure. The terminal includes: a first processor and a first memory for storing a computer program executable by the processor; in which
the first processor is configured to perform steps of the method implemented on the above terminal side when running the computer program.

A base station is further provided in an embodiment of the disclosure. The base station includes: a second processor and a second memory for storing a computer program executable by the processor; in which
the second processor is configured to perform steps of the method implemented on the above base station side when running the computer program.

A storage medium having computer programs stored thereon is further provided in an embodiment of the disclosure. When the computer programs are executed by a processor, steps of the above methods can be implemented.

According to the communication method, the communication apparatus, the terminal, the base station and the storage medium provided by the embodiments of the disclosure, the terminal receives at least two groups of configurations sent by the base station. Each of the at least two groups of configurations include carrier information or BWP information representing a carrier or a BWP configured by a network side for a specific terminal for the communication, or representing a carrier or a BWP configured by a network side for a specific slice or a specific service. Based on at least two groups of random access resources configured by the base station, during the random access process, the specific terminal may select a corresponding random access resource for a random access, or the terminal may select a random access resource corresponding to the slice or the service for the random access. Based on the above solutions, when a random access collision occurs, the low-capability terminal or the terminal corresponding to a low-priority service can be supported to switch BWP, terminal capabilities or service priorities can be classified when resolving the random access collision, which ensures that a high-capability terminal or a high-priority service is prioritized for access. Therefore, the random access collision can be resolved more effectively, and the communication efficiency of the terminal can be ensured.

### BRIEF DESCRIPTION OF THE DRAWINGS

FIG. 1 is a flowchart of a communication method of an embodiment of the disclosure.
FIG. 2 is a flowchart of another communication method of an embodiment of the disclosure.
FIG. 3 is a schematic diagram of transmitting second information of the communication method of an embodiment of the disclosure.
FIG. 4 is a schematic diagram of a communication apparatus of an embodiment of the disclosure.
FIG. 5 is a schematic diagram of another communication apparatus of an embodiment of the disclosure.
FIG. 6 is a schematic diagram of a terminal of an embodiment of the disclosure.
FIG. 7 is a schematic diagram of a base station of an embodiment of the disclosure.

### DETAILED DESCRIPTION

The contention-based random access process includes four steps. The first step corresponds to a message (MSG) 1. At the first step, the terminal sends a preamble to the network side. The second step corresponds to a MSG 2. At the second step, the network side sends a random-access response (RAR) to the terminal. At the third step, the terminal sends a MSG 3 to the network side. At the fourth step, the network side sends a MSG 4 to the terminal. The purpose of the terminal interacting with the network side through the MSG 3 and the MSG 4 is to resolve collisions due to the fact that several terminals within a cell may send the same preamble at the same time. In addition, a two-step random access process may be used. In the two-step random access process, a first message (MSG A) corresponding to the MSG 1 and the MSG 3 of the four-step random access process is sent from the terminal to the network side, and a second message (MSG B) corresponding to the MSG 2 and the MSG 4 of the four-step random access process is sent from the network side to the terminal. In detail, the MSG A includes a preamble and a terminal identifier (ID), or it includes a preamble, a terminal ID and a data packet. In the four-step random access process, the terminal ID may be a resume ID of the terminal for recovering a radio resource control (RRC) link, or it may be a generated random number. In the two-step random access process, the terminal ID may be a resume ID or a cell-radio network temporary identifier (C-RNTI).

In the random access process, the terminal completes random access according to the random access resources configured by the network side. In the related art, the configuration method of the random access resources cannot effectively avoid random access collisions.

On the basis, a communication method, a communication apparatus, a terminal, a base station and a storage medium are provided in the embodiments of the disclosure. The terminal receives at least two groups of configurations sent by the base station. Each of the at least two groups of configurations include carrier information or BWP information representing a carrier or a BWP configured by a network side for a specific terminal for a communication, or representing a carrier or a BWP configured by a network side for a specific slice or a specific service. Based on at least two groups of random access resources configured by the base station, during the random access process, the specific terminal may select a corresponding random access resource for performing the random access, or the terminal may select a random access resource corresponding to the slice or the service for random access. Therefore, random access collisions between different terminal types or terminals corresponding to different slices or services can be effectively avoided.

The disclosure is described in detail below in combination with the accompanying drawings and the embodiments.

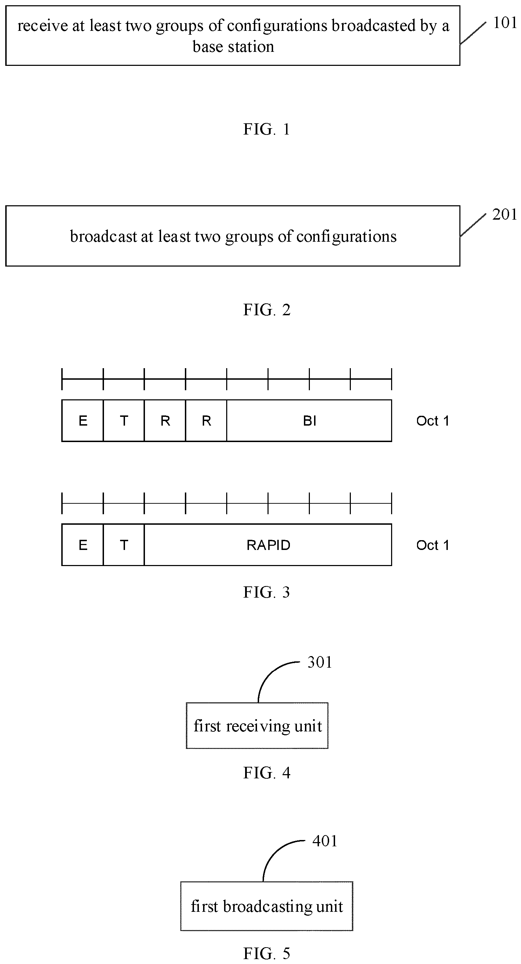

A communication method is provided in an embodiment of the disclosure, which is applied to a terminal. As illustrated in FIG. 1, the method includes the following steps.

At step 101, at least two groups of configurations sent by a base station are received.

Each of the at least two groups of configurations include carrier information or BWP information representing a carrier or a BWP configured by a network side for a specific terminal for a communication, a specific slice, or a specific service.

In practical applications, the base station may broadcast at least two groups of carrier configurations or BWP configurations via system information. The broadcasted configurations represent a carrier or a BWP configured on the network side for the specific terminal for the communication, or represent a carrier or a BWP configured on the network side for the specific slice or the specific service. For example, the base station broadcasts three groups of configurations for BWPs of three bandwidth levels (large, medium and small), assuming that a BWP of each bandwidth level corresponds to a terminal type. In practical applications, the terminal of a corresponding type can select the BWP that matches the terminal type to perform the random access process. If the BWP of each bandwidth level corresponds to a slice type or a service type, the terminal that selects the corresponding slice can select the BWP that matches the slice type to perform the random access process, and the terminal that requests to access to the corresponding service can select the BWP that matches the service type to perform the random access process. In this way, based on at least two groups of random access resources configured by the base station, during the random access process, the specific terminal may select a corresponding random access resource to perform the random access, or the terminal may select a random access resource corresponding to the slice or the service to perform the random access. Therefore, random access collisions between different terminal types or terminals corresponding to different slices or services can be effectively avoided.

In an embodiment, each of the at least two groups of configurations include at least one of:
a frequency of the carrier;
a frequency of the BWP; or
a synchronization signal and physical broadcast channel (PBCH) block (SSB)-based measurement timing configuration (SMTC) period.

In practical applications, after the terminal initiates the random access on an initial BWP, the base station may redirect a specific type of terminal, a terminal that selects a specific slice, or a terminal that requests a specific service, to a specific carrier or BWP in the above at least two groups of configurations. On the basis, in an embodiment, the method further includes:
receiving first information sent by the base station on a first carrier or a first BWP.

The first information is used to instruct the terminal to use the first carrier or the first BWP to perform a random access process, and/or to instruct the terminal to use a second carrier or a second BWP to perform the random access process.

In an embodiment, the first information is carried in a RAR or a MSG 4 sent by the base station to the terminal.

In practical applications, the first information may be considered as a change indication of carrier or BWP, which instructs the terminal to continue to perform the random access process using a current carrier or BWP, or instructs the terminal, based on the above at least two groups of configurations, to redirect to a carrier or BWP that matches the terminal type, the slice type, or the service type to perform the random access process.

In an embodiment, different carrier or BWP change indications can be given to different types of terminals via the first information. That is, the first information is used to instruct:
both a first type of terminal and a second type of terminal to use the first carrier or the first BWP to perform the random access process;
both the first type of terminal and the second type of terminal to use the second carrier or the second BWP to perform the random access process; or
the first type of terminal to use the first carrier or the first BWP to perform the random access process, and the second type of terminal to use the second carrier or the second BWP to perform the random access process.

In an embodiment, the first type of terminal represents an ordinary terminal, and the second type of terminal represents a low-capability terminal. That is, the first type of terminal and the second type of terminal may be differentiated according to a capability of the terminal. It is understood that the first type of terminal and the second type of terminal may also be differentiated according to the slice selected by the terminal or the service requested by the terminal.

Taking that different types of terminals are differentiated according to the capability of the terminal for example, in practical applications, the first information may be bit information. For example, if the first information is "00", it instructs both the ordinary terminal and the low-capability terminal to continue to perform the random access process using the current carrier or BWP. If the first information is "01", it instructs the ordinary terminal to continue to perform the random access process using the current carrier or BWP, and the low-capability terminal to redirect to the carrier or BWP specified in the configuration for the low-capability terminal to perform the random access process. If the first information is "10", it instructs the ordinary terminal to redirect to the carrier or BWP configured in the configuration for the ordinary terminal to perform the random access process, and the low-capability terminal to redirect to the carrier or BWP configured in the configuration for the low-capability terminal to perform the random access process. In addition, if the RAR or the MSG 4 sent by the base station does not carry the above first information, it is understood that the normal terminal and the low-capability terminal both continue to perform the random access process using the current carrier or BWP.

Through the above solutions, after the terminal initiates random access on the initial BWP, the base station can redirect the specific type of terminal, the terminal corresponding to a specific slice type or the terminal corresponding to a specific service type to other BWPs. On the basis, when a random access collision occurs, the above solutions support the low-capability terminal or the terminal corresponding to the low-priority service to switch BWP, capabilities or service priorities of the terminal can be classified when resolving the random access collision, which ensures that the high-capability terminal or the high-priority service is prioritized for access. Therefore, the random access collision can be resolved more effectively. It should be noted that other BWPs to which the terminal is redirected are neither cell-defined SSBs nor initial BWPs, and these BWPs do not have random access channels, but can be used for load offloading.

In the related art, when a random access collision occurs in a contention-based random access process, the terminal type is not distinguished on the priority processing when accessing, and there may be cases in which the low-capability terminal has a higher access priority and completes the random access process before the ordinary terminal.

On the basis, in an embodiment, the method further includes:
receiving second information sent by the base station; in which
the second information is used to instruct the terminal to use a first access priority parameter, and/or to instruct the terminal to use a second access priority parameter.

In an embodiment, the second information may be carried on a MSG2 or a MSG B sent by the base station to the terminal.

In practical applications, the second information may be used as an avoidance indication to instruct the terminal to use an access priority parameter that is currently being used, i.e., originally configured access priority parameter, or to instruct the terminal to use another group of configured access priority parameters. In detail, different avoidance indications may be given to different types of terminals by the second information. That is, the second information is used to instruct:
both a first type of terminal and a second type of terminal to use the first access priority parameter;
the first type of terminal to use the first access priority parameter, and the second type of terminal to use the second access priority parameter; or
both the first type of terminal and the second type of terminal to use the second access priority parameter.

In an embodiment, the first type of terminal represents the ordinary terminal, and the second type of terminal represents the low-capability terminal. That is, the first type of terminal and the second type of terminal may be differentiated according to the capability of the terminal. It is understood that the first type of terminal and the second type of terminal may also be differentiated according to the slice selected by the terminal or the service requested by the terminal.

In practical applications, the base station sends at least two groups of access priority parameters to the terminal in advance through the system information. In an embodiment, before receiving the second information sent by the base station, the method further includes:
receiving at least two groups of access priority parameters sent by the base station; in which
each of the at least two groups of access priority parameters represent an access priority parameter configured by a network side for a specific terminal, a specific slice, or a specific service.

The access priority parameter includes a random access step length parameter and/or a backoff time parameter for configuring an access priority of the terminal. For example, the terminal configured with a longer random access step length and/or a shorter backoff time has a higher access priority and will be prioritized in completing the random access. In practical applications, the base station broadcasts at least two groups of carrier configurations or BWP configurations through the system information. For example, the base station broadcasts two groups of access priority parameters, the first group of access priority parameters represents a shorter random access step length or a longer backoff time, and the second group of access priority parameters represents a longer random access step length or a shorter backoff time, so that when a random access collision occurs between an ordinary terminal and a low-capability terminal, the low-capability terminal is able to avoid the normal terminal and access later.

In an embodiment, an access priority corresponding to the first access priority parameter is higher than an access priority corresponding to the second access priority parameter.

The first access priority parameter represents the access priority parameter configured by the network side for the ordinary terminal, and the second access priority parameter represents the access priority parameter configured by the network side for the low-capability terminal.

In order to ensure that the ordinary terminal has a higher access priority than the low-capability terminal, the network side configures a transmission-first access priority parameter for the ordinary terminal, and/or, configures a transmission-delay access priority parameter for the low-capability terminal, so that when a random access collision occurs, the low-capability terminal is able to backoff, to ensure that the ordinary terminal has the priority to access first.

The base station configures a specified access priority parameter for the low-capability terminal. For example, a shorter random access step length or a longer backoff time is configured for the low-capability terminal, so that when a random access collision occurs between the ordinary terminal and the low-capability terminal, a more delayed access of the low-capability terminal can be realized, thereby avoiding the ordinary terminal. In practical applications, the second information may be bit information. For example, if the second information is "00", it instructs both the ordinary terminal and the low-capability terminal to use the first access priority parameter. If the second information is "01", it instructs the ordinary terminal to use the first access priority parameter, and the low-capability terminal to use the configured second access priority parameter. If the second information is "10", it instructs both the ordinary terminal and the low-capability terminal to use the first access priority parameter. In addition, if the MSG 2 or the MSG B sent by the base station does not carry the above second information, it is understood that the normal terminal and the low-capability terminal both continue to use current access priority parameters. After receiving the second information, the terminal uses the corresponding access priority parameter according to a corresponding bit ID.

In the embodiment of the disclosure, the terminal informs the base station of the terminal type. In practical applications, the terminal may inform the base station of the terminal type by means of explicit indication. On the basis, in an embodiment, the method further includes:
sending third information to the base station.

The third information is used to instruct a terminal type, and the third information is carried in the MSG 1, the MSG 3 or the MSG A to be sent.

In an embodiment, before sending the third information to the base station, the method further includes:
receiving fourth information sent by the base station.

The fourth information is used to instruct the terminal to report the third information through the MSG 1, the MSG 3 or the MSG A.

Before the terminal reports the terminal type, the base station sends the fourth information to the terminal, which is used to instruct which method the terminal uses to report the terminal type. In practical applications, the method instructed in the fourth information can be that the terminal reports the terminal type via the MSG 1; the terminal reports the terminal type via the MSG 3; or the terminal reports the terminal type via the MSG A.

In addition, in an embodiment, the terminal may also inform the base station of the terminal type by means of implicit indication. In detail, the base station sends at least one group of preambles or random access channel (RACH) Occasion (RO) resources to the terminal. For example, the base station sends two groups of preambles or RO resources, one group of preambles or RO resources corresponds to a normal terminal configuration, and the other group of preambles or RO resources corresponds to a low-capability terminal configuration. According to the two groups of preambles or RO resources sent by the base station, the terminal chooses to initiate the random access process on the corresponding resources according to its own terminal type. The base station can determine the terminal type by receiving the MSG 1 or the MSG A sent by the terminal on corresponding resources.

In addition, in the embodiment of the disclosure, the base station may also send a first threshold and a second threshold to the terminal. The first threshold corresponds to the first type of terminal (i.e., the ordinary terminal). When a signal measurement value of the first type of terminal for a serving cell is greater than the first threshold, the two-step random access is used. When the signal measurement value of the first type of terminal for the serving cell is less than or equal to the first threshold, the four-step random access is used. The second threshold corresponds to the second type of terminal (i.e., the low-capability terminal). When a signal measurement value of the second type of terminal for a serving cell is greater than the second threshold, the two-step random access is used. When the signal measurement value of the second type of terminal for the serving cell is less than or equal to the second threshold, the four-step random access is used.

It should be noted that the second type of terminal has a weaker uplink capability compared to the first type of terminal. Thus coverage of the second type of terminal using two-step random access is worse. Therefore, the second threshold corresponding to the second type of terminal is higher than the first threshold corresponding to the first type of terminal.

Correspondingly, the embodiment of the disclosure also provides a communication method, which is applied to a base station. As illustrated in FIG. 2, the method includes the following steps.

At step 201, at least two groups of configurations are broadcasted.

Each of the at least two groups of configurations include carrier information or BWP information representing a carrier or a BWP configured by a network side for a specific terminal for a communication, a specific slice, or a specific service.

In practical applications, the base station may broadcast at least two groups of carrier configurations or BWP configurations via the system information. For example, the base station broadcasts three groups of configurations for BWPs of three bandwidth levels (large, medium and small), assuming that each bandwidth level of BWP corresponds to a terminal type, in practical applications, the terminal of the corresponding type can select the BWP that matches the terminal type to perform the random access process. If each bandwidth level of BWP corresponds to a slice type or a service type, the terminal that selects the corresponding slice can select the BWP that matches the slice type to perform the random access process, and the terminal that requests to access to the corresponding service can select the BWP that matches the service type to perform the random access process. In this way, based on at least two groups of random access resources configured by the base station, during the random access process, the specific terminal may select a corresponding random access resource to perform the random access, or the terminal may select a random access resource corresponding to the slice or the service to perform the random access. Therefore, random access collisions between different terminal types or terminals corresponding to different slices or services can be effectively avoided.

In an embodiment, each of the at least two groups of configurations include at least one of:
a frequency of the carrier;
a frequency of the BWP; or
a SMTC period.

In an embodiment, the method further includes:
sending first information to a terminal.

The first information is used to instruct the terminal to use the current carrier or BWP to perform a random access process, and/or to instruct the terminal to use a specified carrier or BWP to perform the random access process.

After the terminal initiates random access on the initial BWP, the base station can redirect the specific type of terminal, the terminal corresponding to a specific slice type or the terminal corresponding to a specific service type to a corresponding carrier or BWP specified in the at least two groups of configurations.

In an embodiment, the first information is carried in a RAR or MSG 4 sent by the base station to the terminal. The first information may be considered as a change indication of carrier or BWP, which instructs the terminal to continue to perform the random access process using a current carrier or BWP, or instructs the terminal, based on the above at least two groups of configurations, to redirect to a carrier or BWP that matches the terminal type, the slice type, or the service type to perform the random access process.

In an embodiment, different carrier or BWP change indications can be given to different types of terminals through the first information. That is, the first information is used to instruct:
a first type of terminal and a second type of terminal both use a current carrier or BWP to perform the random access process;
the first type of terminal and the second type of terminal both use a specified carrier or BWP to perform the random access process; or
the first type of terminal uses the current carrier or BWP to perform the random access process, and the second type of terminal uses the specified carrier or BWP to perform the random access process.

In an embodiment, the first type of terminal represents an ordinary terminal, and the second type of terminal represents a low-capability terminal. That is, the first type of terminal and the second type of terminal may be differentiated according to a capability of the terminal. It is understood that the first type of terminal and the second type of terminal may also be differentiated according to the slice selected by the terminal or the service requested by the terminal.

Taking that different types of terminals are classified according to the capability of the terminal for example, in practical applications, the first information may be bit information. For example, if the first information is "00", it instructs the ordinary terminal and the low-capability terminal to continue to perform the random access process using the current carrier or BWP. If the first information is "01", it instructs the ordinary terminal to continue to perform the random access process using the current carrier or BWP, and the low-capability terminal to redirect to the carrier or BWP specified in the configuration for the low-capability terminal to perform the random access process. If the first information is "10", it instructs the ordinary terminal to redirect to the carrier or BWP configured in the configuration for the ordinary terminal to perform the random access process, and the low-capability terminal to redirect to the carrier or BWP configured in the configuration for the low-capability terminal to perform the random access process. In addition, if the RAR or the MSG 4 sent by the base station does not carry the above first information, it is understood that the normal terminal and the low-capability terminal both continue to perform the random access process using the current carrier or BWP.

Through the above solutions, after the terminal initiates random access on the initial BWP, the base station can redirect the specific type of terminal, the terminal corresponding to a specific slice type or the terminal corresponding to a specific service type to other BWPs. On the basis, when a random access collision occurs, the above solutions support the low-capability terminal or the terminal corresponding to the low-priority service to switch BWP, terminal capabilities or service priorities can be classified when resolving the random access collision, which ensures that the high-capability terminal or a high-priority service is prioritized for access. Therefore, the random access collision can be resolved more effectively.

In the related art, when a random access collision occurs in the contention-based random access process, the terminal type is not distinguished on the priority processing when accessing, and there may be cases in which the low-capability terminal has a higher access priority and completes the random access process before the ordinary terminal.

On the basis, in an embodiment, the method further includes:
sending second information to a terminal.

The second information is used to instruct the terminal to use the current access priority parameter, and/or to instruct the terminal to use the specified access priority parameter.

In an embodiment, the second information may be carried on a MSG2 or a MSG B sent by the base station to the terminal.

In practical applications, the second information may be used as an avoidance indication to instruct the terminal to use an access priority parameter that is currently being used, i.e., originally configured access priority parameter, or to instruct the terminal to use a specified access priority parameter. In detail, different avoidance indications may be given to different types of terminals by the second information. That is, the second information is used to instruct:
both a first type of terminal and a second type of terminal to use a current access priority parameter;
the first type of terminal to use the current access priority parameter, and the second type of terminal to use a specified access priority parameter; or
both the first type of terminal and the second type of terminal to use the specified access priority parameter.

In practical applications, the base station broadcasts at least two groups of access priority parameters to the terminal in advance through the system information. In an embodiment, before sending the second information to the terminal, the method further includes:
broadcasting at least two groups of access priority parameters.

Each of the at least two groups of access priority parameters represent an access priority parameter configured by a network side for a specific terminal, a specific slice, or a specific service.

The access priority parameter includes a random access step length parameter and/or a backoff time parameter for configuring an access priority of the terminal. For example, the terminal configured with a longer random access step length and/or a shorter backoff time has a higher access priority and will be prioritized in completing the random access. In practical applications, the base station broadcasts at least two groups of carrier configurations or BWP configurations through the system information. For example, the base station broadcasts two groups of access priority parameters, the first group of access priority parameters represents a shorter random access step length or a longer backoff time, and the second group of access priority parameters represents a longer random access step length or a shorter backoff time, so that when a random access collision occurs between an ordinary terminal and a low-capability terminal, the low-capability terminal is able to avoid the normal terminal and access later. In addition, the base station may also carry the at least two groups of access priority parameters in the RAR. As illustrated in FIG. 3, in the RAR sent by the base station to the terminal, "R" represents a reserved bit, and it is used to instruct the low-capability terminal to use a longer backoff time, or instruct that the low-capability terminal cannot initiate random access again within a fixed period of time. As an example implementation, upon receiving the second information sent by the base station, the low-capability terminal reads the backoff time instructed on the "R" bit and uses a value longer than an instructed backoff time as the backoff time. For example, a certain multiple of the instructed backoff time is used as the backoff time, or a certain amount of time is added to the instructed backoff time to obtain a longer backoff time. For the ordinary terminal, the backoff time instructed on the "R" bit is used directly.

In an embodiment, an access priority corresponding to the first access priority parameter is higher than an access priority corresponding to the second access priority parameter.

The first access priority parameter represents the access priority parameter configured by the network side for the ordinary terminal, and the second access priority parameter represents the access priority parameter configured by the network side for the low-capability terminal.

In order to ensure that the ordinary terminal has a higher access priority than the low-capability terminal, the network side configures a transmission-first access priority parameter for the ordinary terminal, and/or, configures a transmission-delay access priority parameter for the low-capability terminal, so that when a random access collision occurs, the low-capability terminal is able to backoff, to ensure that the ordinary terminal has the priority to access first.

The base station configures a specified access priority parameter for the low-capability terminal. For example, a shorter random access step length or a longer backoff time is configured for the low-capability terminal, so that when a random access collision occurs between the ordinary terminal and the low-capability terminal, a more delayed access of the low-capability terminal can be realized, thereby avoiding the ordinary terminal. In practical applications, the second information may be bit information. For example, if the second information is "00", it instructs both the ordinary terminal and the low-capability terminal to use the current access priority parameter. If the second information is "01", it instructs the ordinary terminal to use the current access priority parameter, and the low-capability terminal to use the specified access priority parameter in the configuration. If the second information is "10", it instructs both the ordinary terminal and the low-capability terminal to use the current access priority parameter. In addition, if the MSG 2 or the MSG B sent by the base station does not carry the above second information, it is understood that the normal terminal and the low-capability terminal both continue to use current access priority parameters. After receiving the second information, the terminal uses the corresponding access priority parameter according to a corresponding bit ID.

In an embodiment, the method further includes:
determining the terminal type of the terminal based on a preamble of a MSG 1 or a MSG A sent by the terminal or RO resources, and/or based on third information carried in the MSG 1, a MSG 3 or the MSG A sent by the terminal; and
configuring different groups of random access resources for different types of terminals; in which
the third information is used to instruct the terminal type.

In practical applications, the terminal may inform the base station of the terminal type by means of explicit indication. In an embodiment, the method further includes:
determining the terminal type of the terminal based on the third information carried in the MSG 1, the MSG 3 or the MSG A sent by the terminal.

The third information is used to instruct the terminal type.

In an embodiment, before the third information carried in the MSG 1, the MSG 3 or the MSG A sent by the terminal, the method further includes:
sending fourth information to the terminal.

The fourth information is used to instruct the terminal to report the third information through the MSG 1, the MSG 3 or the MSG A.

Before the terminal reports the terminal type, the base station sends the fourth information to the terminal, which is used to instruct the terminal which method to use to report the terminal type. In practical applications, the method instructed in the fourth information can be that the terminal reports the terminal type via the MSG 1; the terminal reports the terminal type via the MSG 3; or the terminal reports the terminal type via the MSG A.

In addition, in an embodiment, the terminal may also inform the base station of the terminal type by means of implicit indication. In detail, the base station sends at least one group of preambles or RO resources to the terminal. For example, the base station sends two groups of preambles or RO resources, one group of preambles or RO resources corresponds to a normal terminal configuration, and the other group of preambles or RO resources corresponds to a low-capability terminal configuration. According to the two groups of preambles or RO resources sent by the base station, the terminal chooses to initiate the random access process on the corresponding resources according to its own terminal type. The base station can determine the terminal type by receiving the MSG 1 or the MSG A sent by the terminal on corresponding resources. On the basis, the method further includes:
determining the terminal type of a terminal based on the preamble of the MSG 1 or the MSG A sent by the terminal or RO resources.

In addition, in the embodiment of the disclosure, the base station may also send a first threshold and a second threshold to the terminal. The first threshold corresponds to the first type of terminal (i.e., the ordinary terminal). When a signal measurement value of the first type of terminal for a serving cell is greater than the first threshold, the two-step random access is used. When the signal measurement value of the first type of terminal for the serving cell is less than or equal to the first threshold, the four-step random access is used. The second threshold corresponds to the second type of terminal (i.e., the low-capability terminal). When a signal measurement value of the second type of terminal for a serving cell is greater than the second threshold, the two-step random access is used. When the signal measurement value of the second type of terminal for the serving cell is less than or equal to the second threshold, the four-step random access is used.

It should be noted that the second type of terminal has a weaker uplink capability compared to the first type of terminal. Thus coverage of the second type of terminal using two-step random access is worse. Therefore, the second threshold corresponding to the second type of terminal is higher than the first threshold corresponding to the first type of terminal.

Based on the embodiment of the disclosure, in the random access process, the specific terminal may select a corresponding random access resource to perform the random access, or the terminal may select a corresponding random access resource to perform the random access according to a corresponding slice or service, thereby effectively avoiding random access collisions between terminals of different types or terminals corresponding to different slices or services. In addition, for terminals of different types or terminals corresponding to different slices or services, a delayed access for the low-capability terminal or a low-priority service can be realized, to avoid the ordinary terminal or the high-priority service.

In order to realize the method of the embodiment of the disclosure, a communication apparatus is further provided in the embodiment of the disclosure, which is set in a terminal. As illustrated in FIG. 4, the apparatus includes:
a first receiving unit 401, configured to receive at least two groups of configurations sent by a base station; in which
each of the at least two groups of configurations include carrier information or BWP information representing a carrier or a BWP configured by a network side for a specific terminal for a communication, a specific slice, or a specific service.

In an embodiment, the apparatus further includes:
a second receiving unit, configured to receive first information sent by the base station on a first carrier or a first BWP; in which
the first information is used to instruct the terminal to use a current carrier or BWP to perform a random access process, and/or to instruct the terminal to use a specified carrier or BWP to perform the random access process.

In an embodiment, the first information is used to instruct:
both a first type of terminal and a second type of terminal to use a current carrier or BWP to perform the random access process;
both the first type of terminal and the second type of terminal to use a specified carrier or BWP to perform the random access process; or
the first type of terminal to use the current carrier or BWP to perform the random access process, and the second type of terminal to use the specified carrier or BWP to perform the random access process.

In an embodiment, the first type of terminal represents an ordinary terminal, and the second type of terminal represents a low-capability terminal.

In an embodiment, the first information is carried in a RAR or a MSG 4 sent by the base station.

In an embodiment, each of the at least two groups of configurations include at least one of:
a frequency of the carrier;
a frequency of the BWP; or
a SMTC period.

In an embodiment, the apparatus further includes:
a third receiving unit, configured to receive second information sent by the base station; in which
the second information is used to instruct the terminal to use a current access priority parameter, and/or to instruct the terminal to use a specified access priority parameter.

In an embodiment, the apparatus further includes:
a fourth receiving unit, configured to receive at least two groups of access priority parameters sent by the base station before receiving the second information send by the base station; in which
each of the at least two groups of access priority parameters represent an access priority parameter configured by the network side for a specific terminal, a specific slice, or a specific service.

In an embodiment, an access priority corresponding to the first access priority parameter is higher than an access priority corresponding to the second access priority parameter; in which
the first access priority parameter represents the access priority parameter configured by the network side for the ordinary terminal, and the second access priority parameter represents the access priority parameter configured by the network side for the low-capability terminal.

In an embodiment, the second information is used to instruct:
both a first type of terminal and a second type of terminal to use current access priority parameters;
the first type of terminal to use the current access priority parameter, and the second type of terminal to use a specified access priority parameter; or
both the first type of terminal and the second type of terminal to use the specified access priority parameters.

In an embodiment, the apparatus further includes:
a first sending unit, configured to send third information to the base station; in which
the third information is used to instruct a terminal type, and the third information is carried in a MSG 1, a MSG 3 or a MSG A to be sent.

In an embodiment, the apparatus further includes:
a fifth receiving unit, configured to receive fourth information sent by the base station before sending the third information to the base station; in which
the fourth information is used to instruct the terminal to report the third information through the MSG 1, the MSG 3 or the MSG A.

In practical applications, the first receiving unit 401, the second receiving unit, the third receiving unit, the fourth receiving unit, the first sending unit and the fifth receiving unit may be realized by a communication interface in the communication apparatus.

In order to realize the method of the embodiment of the disclosure, a communication apparatus is further provided in the embodiment of the disclosure, which is set in a base station. As illustrated in FIG. 5, the apparatus includes:
a first broadcasting unit 501, configured to broadcast at least two groups of configurations; in which
each of the at least two groups of configurations include carrier information or BWP information representing a carrier or a BWP configured by a network side for a specific terminal for a communication, a specific slice, or a specific service.

In an embodiment, the apparatus further includes:
a second sending unit, configured to send first information to a terminal; in which
the first information is used to instruct the terminal to use a current carrier or BWP to perform the random access process, and/or to instruct the terminal to use a specified carrier or BWP to perform the random access process.

In an embodiment, the first information is used to instruct:
both a first type of terminal and a second type of terminal to use the current carrier or BWP to perform the random access process;
both the first type of terminal and the second type of terminal to use the specified carrier or BWP to perform the random access process; or
the first type of terminal to use the current carrier or BWP to perform the random access process, and the second type of terminal to use the specified carrier or BWP to perform the random access process.

In an embodiment, the first type of terminal represents an ordinary terminal, and the second type of terminal represents a low-capability terminal.

In an embodiment, the first information is carried in a RAR or a MSG 4 sent by the base station.

In an embodiment, each of the at least two groups of configurations include at least one of:
a frequency of the carrier;
a frequency of the BWP; or
a SMTC period.

In an embodiment, the apparatus further includes:
a third sending unit, configured to send second information to the terminal; in which
the second information is configured to instruct the terminal to use a current access priority parameter, and/or to instruct the terminal to use a specified access priority parameter.

In an embodiment, the apparatus further includes:
a second broadcasting unit, configured to broadcast at least two groups of access priority parameters before sending the second information to the terminal; in which
each of the at least two groups of access priority parameters represent an access priority parameter configured by the network side for the specific terminal, the specific slice, or the specific service.

In an embodiment, an access priority corresponding to the first access priority parameter is higher than an access priority corresponding to the second access priority parameter; in which
the first access priority parameter represents the access priority parameter configured by the network side for the ordinary terminal, and the second access priority parameter represents the access priority parameter configured by the network side for the low-capability terminal.

In an embodiment, the second information is used to instruct:
both a first type of terminal and a second type of terminal to use current access priority parameter;
the first type of terminal to use the current access priority parameter, and the second type of terminal to use a specified access priority parameter; or
both the first type of terminal and the second type of terminal to use the specified access priority parameter.

In an embodiment, the apparatus further includes:
a determining unit, configured to determine a terminal type of the terminal based on a preamble of a MSG 1 or a MSG A sent by the terminal or RO resources, and/or based on third information carried in the MSG 1, a MSG 3 or the MSG A sent by the terminal; and
a configuring unit, configured to configure different groups of random access resources for different types of terminals.

In an embodiment, the apparatus further includes:
a fourth sending unit, configured to send fourth information to the terminal; in which
the fourth information is used to instruct the terminal to report the third information via the MSG 1, the MSG 3 or the MSG A.

In practical applications, the first broadcasting unit 501, the second sending unit, the third sending unit, the second broadcasting unit and the fourth sending unit may be realized by a communication interface in a random access device. The configuration unit and the determining unit may be realized by a processor in the communication apparatus.

It is noted that the communication apparatus provided by the above embodiment is only exemplified by individual program module as described above during the random access. In practical applications, the above processing can be assigned to be completed by different program modules as desired, that is, internal structure of the apparatus can be divided into different program modules to complete all or part of the processing described above. In addition, the communication apparatus provided in the above embodiment belongs to the same concept as the communication method embodiments, and its specific realization process is detailed in the method embodiments, which will not be repeated herein.

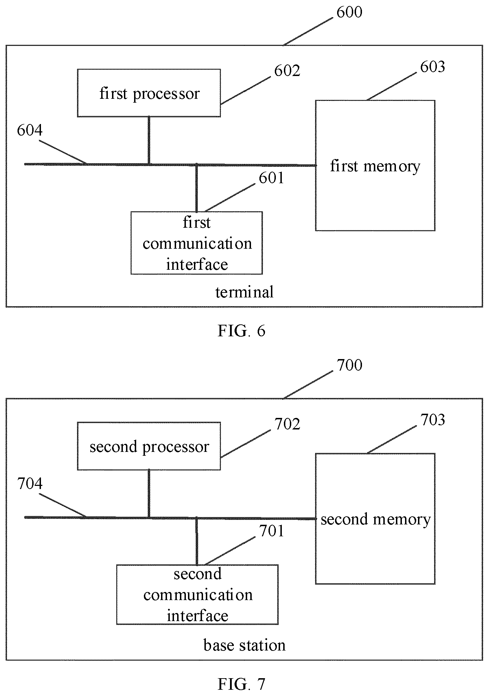

Based on the hardware implementation of the program module described above, and in order to realize the method on the terminal side of the embodiments of the disclosure, a terminal is further provided in the embodiment of the disclosure. As illustrated in FIG. 6, a terminal 600 includes: a first communication interface 601 and a first processor 602.

The first communication interface 601 can perform information interaction with other network nodes.

The first processor 602 is connected to the first communication interface 601 to implement information interaction with other network nodes, and is configured to execute the method provided by one or more of the above mentioned technical solutions on the terminal side when running computer programs. The computer programs are stored on a first memory 603.

In detail, the first communication interface 601 is configured to receive at least two groups of configurations broadcasted by a base station; in which
each of the at least two groups of configurations include carrier information or BWP information representing a carrier or a BWP configured by a network side for a specific terminal for a communication, a specific slice, or a specific service.

In an embodiment, the first communication interface 601 is further configured to:
receive first information sent by the base station; in which
the first information is used to instruct the terminal to use the current carrier or BWP to perform a random access process, and/or to instruct the terminal to use a specified carrier or BWP to perform the random access process.

In an embodiment, the first information is used to instruct:
both a first type of terminal and a second type of terminal to use the current carrier or BWP to perform the random access process;
both the first type of terminal and the second type of terminal to use a specified carrier or BWP to perform the random access process; or
the first type of terminal to use the current carrier or BWP to perform the random access process, and the second type of terminal to use the specified carrier or BWP to perform the random access process.

In an embodiment, the first type of terminal represents an ordinary terminal, and the second type of terminal represents a low-capability terminal.

In an embodiment, the first information is carried in a RAR or a MSG 4 sent by the base station.

In an embodiment, each of the at least two groups of configurations include at least one of:
a frequency of the carrier;
a frequency of the BWP; or
a SMTC period.

In an embodiment, the first communication interface 601 is further configured to:
receive second information sent by the base station; in which
the second information is used to instruct the terminal to use a current access priority parameter, and/or to instruct the terminal to use a specified access priority parameter.

In an embodiment, the first communication interface 601 is further configured to: before receiving the second information sent by the base station, receive at least two groups of access priority parameters broadcasted by the base station; in which
each of the at least two groups of access priority parameters represent an access priority parameter configured by a network side for a specific terminal, a specific slice, or a specific service.

In an embodiment, an access priority corresponding to the first access priority parameter is higher than an access priority corresponding to the second access priority parameter; in which
the first access priority parameter represents the access priority parameter configured by the network side for the ordinary terminal, and the second access priority parameter represents the access priority parameter configured by the network side for the low-capability terminal.

In an embodiment, the second information is used to instruct:
both a first type of terminal and a second type of terminal to use the current access priority parameter;
the first type of terminal to use the current access priority parameter, and the second type of terminal to use the specified access priority parameter; or
both the first type of terminal and the second type of terminal to use the specified access priority parameter.

In an embodiment, the first communication interface 601 is further configured to:
send third information to the base station; in which
the third information is used to instruct a terminal type, and the third information is carried in a MSG 1, a MSG 3 or a MSG A to be sent.

In an embodiment, the first communication interface 601 is further configured to: receive fourth information sent by the base station before sending the third information to the base station; in which
the fourth information is used to instruct the terminal to report the third information through the MSG 1, the MSG 3 or the MSG A.

It should be noted that the specific processing process of the first processor 602 and the first communication interface 601 can be understood with reference to the above method.

Certainly, in practical applications, the components of the terminal 600 are coupled together through a bus system 604. It is understood that the bus system 604 is configured to realize connection and communication between these components. In addition to a data bus, the bus system 604 includes a power bus, a control bus, and a status signal bus. To make it clear, several kinds of buses are labeled as the bus system 604 in FIG. 6.

The first memory 603 in the embodiment of the disclosure is configured to store various types of data to support operations of the terminal 600. Examples of such data include: any computer program configured to be operated on the terminal 600.

The method disclosed in the above embodiments of the disclosure may be applied to the first processor 602 or realized by the first processor 602. The first processor 602 may be an integrated circuit chip with signal processing capabilities. In the implementation, the steps of the above method may be accomplished by integrated logic circuits of hardware in the first processor 602 or by instructions in the form of software. The first processor 602 described above may be a general-purpose processor, a Digital Signal Processor (DSP), or other programmable logic devices, discrete gates, transistor logic devices or discrete hardware components, or the like. The first processor 602 may implement or perform the methods, steps, and logic block diagrams disclosed in the embodiments of the disclosure. The general-purpose processor may be a microprocessor or any conventional processor. The steps of the methods disclosed in combination with the embodiments of the disclosure may be directly implemented by a hardware decoding processor, or implemented by a combination of hardware and software modules in the decoding processor. The software module may be located in a storage medium, which is located in the first memory 603. The first processor 602 reads the information in the first memory 603 and completes the steps of the foregoing methods in combination with its hardware.

In the exemplary embodiments, the terminal 600 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors or other electronic components, and is configured to perform the foregoing methods.

Based on the hardware implementation of the program module described above, and in order to realize the method on the base station side of the embodiments of the disclosure, a base station is further provided in the embodiment of the disclosure. As illustrated in FIG. 7, a base station 700 includes:
a second communication interface 701, which is able to perform information interaction with other network nodes; and
a second processor 702, which is connected to the second communication interface 701 to perform information interaction with other network nodes, and is configured to execute the methods provided by one or more of the above mentioned technical solutions on the base station side when running computer programs. The computer programs are stored on a second memory 703.

In detail, the second communication interface 701 is configured to:
broadcast at least two groups of configurations; in which
each of the at least two groups of configurations include carrier information or BWP information representing a specified carrier or a BWP configured by a network side for a specific terminal for a communication, a specific slice, or a specific service.

In an embodiment, the second communication interface 701 is further configured to:
send first information to a terminal; in which
the first information is used to instruct the terminal to use a current carrier or BWP to perform a random access process, and/or to instruct the terminal to use a specified carrier or BWP to perform the random access process.

In an embodiment, the first information is used to instruct:
both a first type of terminal and a second type of terminal to use the current carrier or BWP to perform the random access process;
both the first type of terminal and the second type of terminal to use the specified carrier or BWP to perform the random access process; or
the first type of terminal to use the current carrier or BWP to perform the random access process, and the second type of terminal to use the specified carrier or BWP to perform the random access process.

In an embodiment, the first type of terminal represents an ordinary terminal, and the second type of terminal represents a low-capability terminal.

In an embodiment, the first information is carried in a RAR or a MSG 4 sent by the base station.

In an embodiment, each of the at least two groups of configurations include at least one of:
a frequency of the carrier;
a frequency of the BWP; or
a SMTC period.

In an embodiment, the second communication interface 701 is further configured to:
send second information to the terminal; in which
the second information is used to instruct the terminal to use a current access priority parameter, and/or to instruct the terminal to use a specified access priority parameter.

In an embodiment, the second communication interface 701 is further configured to: broadcast at least two groups of access priority parameters before sending the second information to the terminal; in which
each of the at least two groups of access priority parameters represent an access priority parameter configured by a network side for the specific terminal, the specific slice, or the specific service.

In an embodiment, an access priority corresponding to the first access priority parameter is higher than an access priority corresponding to the second access priority parameter; in which
the first access priority parameter represents the access priority parameter configured by the network side for the ordinary terminal, and the second access priority parameter represents the access priority parameter configured by the network side for the low-capability terminal.

In an embodiment, the second information is used to instruct:
both a first type of terminal and a second type of terminal to use the current access priority parameter;
the first type of terminal to use the current access priority parameter, and the second type of terminal to use the specified access priority parameter; or
both the first type of terminal and the second type of terminal to use the specified access priority parameter.

In an embodiment, the second processor 702 is configured to:
determine a terminal type of the terminal based on a preamble of a MSG 1 or a MSG A sent by the terminal or RO resources, and/or based on third information carried in the MSG 1, a MSG 3 or the MSG A sent by the terminal; and
configure different groups of random access resources for different types of terminals.

The third information is used to instruct the terminal type.

In an embodiment, the second communication interface 701 is further configured to:
send fourth information to the terminal; in which
the fourth information is used to instruct the terminal to report the third information through the MSG 1, the MSG 3 or the MSG A.

It should be noted that the specific processing process of the second processor 702 and the second communication interface 701 can be understood with reference to the above method.

In practical applications, components of the base station 700 are coupled together through a bus system 704. It is understood that the bus system 704 is configured to realize connections and communications between these components. In addition to a data bus, the bus system 704 includes a power bus, a control bus, and a status signal bus. To make it clear, several kinds of buses are labeled as the bus system 704 in FIG. 7.

The second memory 703 in the embodiment of the disclosure is configured to store various types of data to support operations of the base station 700. Examples of such data include: any computer program configured to be operated on the base station 700.

The method disclosed in the above embodiments of the disclosure may be applied to the second processor 702 or realized by the second processor 702. The second processor 702 may be an integrated circuit chip with signal processing capabilities. In the implementation, the steps of the above method may be accomplished by integrated logic circuits of hardware in the second processor 702 or by instructions in the form of software. The second processor 702 described above may be a general-purpose processor, a DSP, or other programmable logic devices, discrete gates, transistor logic devices or discrete hardware components, or the like. The second processor 702 may implement or perform the methods, steps, and logic block diagrams disclosed in the embodiments of the disclosure. The general-purpose processor may be a microprocessor or any conventional processor. The steps of the methods disclosed in combination with the embodiments of the disclosure may be directly implemented by a hardware decoding processor, or implemented by a combination of hardware and software modules in the decoding processor. The software module may be located in a storage medium, which is located in the second memory 703. The second processor 702 reads the information in the second memory 703 and completes the steps of the foregoing methods in combination with its hardware.

In the exemplary embodiments, the base station 700 may be implemented by one or more ASICs, DSPs, PLDs, CPLDs, FPGAs, general-purpose processors, controllers, MCUs, microprocessors, or other electronic components for performing the foregoing methods.

It is understood that the memories (i.e., the first memory 603 and the second memory 703) of the embodiments of the disclosure may be volatile memories or non-volatile memories, or may include both volatile memories and non-volatile memories. The non-volatile memories may be Read-Only Memories (ROMs), Programmable Read-Only Memories (PROMs), Erasable Programmable Read-Only Memories (EPROMs), Electrically Erasable Programmable Read-Only Memories (EEPROMs), Ferromagnetic Random Access Memories (FRAMs), flash memories, magnetic surface memories, optical disks, or Compact Disc Read-Only Memory (CD-ROMs). The magnetic surface memories may be disk memories or tape memories. The volatile memory may be a Random Access Memory (RAM), which is used as an external cache. By way of illustrative but not restrictive description, many forms of RAMs are available, such as Static Random Access Memories (SRAMs), Synchronous Static Random Access Memories (SSRAMs), Dynamic Random Access Memories (DRAMs), Synchronous Dynamic Random Access Memories (SDRAMs), Double Data Rate Synchronous Dynamic Random Access Memories (DDRSDRAMs), Enhanced Synchronous Dynamic Random Access Memories (ESDRAMs), SyncLink Dynamic Random Access Memories (SLDRAMs), and Direct Rambus Random Access Memories (DRRAMs). The memories described in the embodiments of the disclosure are intended to include, but are not limited to, these and any other suitable types of memories.

In exemplary embodiments, the embodiments of the disclosure also provide a storage medium, i.e., a computer storage medium, specifically a computer-readable storage medium. For example, it includes a first memory 1203 having computer programs stored thereon. The computer programs may be executed by the first processor 602 of the terminal 600 to accomplish the steps described in the preceding method on the terminal side. For another example, it includes the second memory 703 having computer programs stored thereon. The computer programs described above may be executed by the second processor 702 of the base station 700 to complete the steps described in the preceding method on the base station side. The computer readable storage medium may be memories such as FRAMs, ROMs, PROMs, EPROMs, EEPROMs, Flash Memories, magnetic surface memories, optical disks, or CD-ROMs.

It should be noted that the terms "first", "second" and the like are used to distinguish similar objects and are not necessarily used to describe a particular order or sequence.

In addition, the technical solutions of the embodiments of the disclosure can be arbitrarily combined with each other without collisions.

Only the preferred embodiments of the disclosure are described above, and are not intended to limit the scope of protection of the disclosure.

## Claims

1. A communication method, applied to a terminal, comprising:
receiving at least two groups of configurations sent by a base station; wherein
each of the at least two groups of configurations comprise carrier information or bandwidth part (BWP) information representing a carrier or a BWP configured by a network side for a specific terminal for a communication, a specific slice, or a specific service.

2. The method of claim 1, further comprising:
receiving first information sent by the base station on a first carrier or a first BWP; wherein
the first information is used to instruct the terminal to use the first carrier or the first BWP to perform a random access process, and/or to instruct the terminal to use a second carrier or a second BWP to perform the random access process.

3. The method of claim 2, wherein the first information is used to instruct:
both a first type of terminal and a second type of terminal to use the first carrier or the first BWP to perform the random access process;
both the first type of terminal and the second type of terminal to use the second carrier or the second BWP to perform the random access process; or
the first type of terminal to use the first carrier or the first BWP to perform the random access process, and the second type of terminal to use the second carrier or the second BWP to perform the random access process.

4. The method of claim 3, wherein the first type of terminal represents an ordinary terminal, and the second type of terminal represents a low-capability terminal.

5. The method of claim 2, wherein the first information is carried in a random-access response (RAR) or a message (MSG) 4 sent by the base station.

6. The method of claim 1, wherein each of the at least two groups of configurations comprise at least one of:
a frequency of the carrier;
a frequency of the BWP; or
a synchronization signal and physical broadcast channel (PBCH) block (SSB)-based measurement timing configuration (SMTC) period.

7. The method of claim 1, further comprising:
receiving second information sent by the base station; wherein
the second information is used to instruct the terminal to use a first access priority parameter, and/or to instruct the terminal to use a second access priority parameter.

8. The method of claim 7, wherein before receiving the second information sent by the base station using the first access priority parameter, the method further comprises:
receiving at least two groups of access priority parameters sent by the base station; wherein
each of the at least two groups of access priority parameters represent an access priority parameter configured by the network side for the specific terminal, the specific slice, or the specific service.

9. The method of claim 8, wherein an access priority corresponding to the first access priority parameter is higher than an access priority corresponding to the second access priority parameter; wherein
the first access priority parameter represents the access priority parameter configured by the network side for an ordinary terminal, and the second access priority parameter represents the access priority parameter configured by the network side for a low-capability terminal.

10. The method of claim 7, wherein the second information is used to instruct:
both a first type of terminal and a second type of terminal to use the first access priority parameter;
the first type of terminal to use the first access priority parameter, and the second type of terminal to use the second access priority parameter; or
both the first type of terminal and the second type of terminal to use the second access priority parameter.

11. The method of claim 1, further comprising:
sending third information to the base station; wherein
the third information is used to instruct a terminal type, and the third information is carried in a MSG 1, a MSG 3 or a MSG A to be sent.

12. The method of claim 11, wherein before sending the third information to the base station, the method further comprises:
receiving fourth information sent by the base station; wherein
the fourth information is used to instruct the terminal to report the third information through the MSG 1, the MSG 3 or the MSG A.

13. A communication method, applied to a base station, comprising:
sending at least two groups of configurations; wherein
each of the at least two groups of configurations comprise carrier information or bandwidth part (BWP) information representing a carrier or a BWP configured by a network side for a specific terminal for a communication, a specific slice, or a specific service.

14. The method of claim 13, further comprising:
sending first information to a terminal on a first carrier or a first BWP; wherein
the first information is used to instruct the terminal to use the first carrier or the first BWP to perform a random access process, and/or to instruct the terminal to use a second carrier or a second BWP to perform the random access process.

15. The method of claim 14, wherein the first information is used to instruct:
both a first type of terminal and a second type of terminal to use the first carrier or the first BWP to perform the random access process;
both the first type of terminal and the second type of terminal to use the second carrier or the second BWP to perform the random access process; or
the first type of terminal to use the first carrier or the first BWP to perform the random access process, and the second type of terminal to use the second carrier or the second BWP to perform the random access process.

16. The method of claim 15, wherein the first type of terminal represents an ordinary terminal, and the second type of terminal represents a low-capability terminal.

17. The method of claim 14, wherein the first information is carried in a random-access response (RAR) or a message (MSG) 4 sent by the base station.

18. The method of claim 13, wherein each of the at least two groups of configurations comprise at least one of:
a frequency of the carrier;
a frequency of the BWP; or
a SMTC period.

19. The method of claim 13, further comprising:
sending second information to the terminal; wherein
the second information is used to instruct the terminal to use a first access priority parameter, and/or to instruct the terminal to use a second access priority parameter.

20. The method of claim 19, wherein before sending the second information to the terminal, the method further comprises:
broadcasting at least two groups of access priority parameters; wherein
each of the at least two groups of access priority parameters represent an access priority parameter configured by a network side for the specific terminal, the specific slice, or the specific service.

21. The method of claim 20, wherein an access priority corresponding to the first access priority parameter is higher than an access priority corresponding to the second access priority parameter; wherein
the first access priority parameter represents the access priority parameter configured by the network side for an ordinary terminal, and the second access priority parameter represents the access priority parameter configured by the network side for a low-capability terminal.

22. The method of claim 19, wherein the second information is used to instruct:
both a first type of terminal and a second type of terminal to use the first access priority parameter;
the first type of terminal to use the first access priority parameter, and the second type of terminal to use the second access priority parameter; or
both the first type of terminal and the second type of terminal to use the second access priority parameter.

23. The method of claim 13, further comprising:
determining a terminal type of a terminal based on a preamble of a MSG 1 or a MSG A sent by the terminal or random access channel (RACH) Occasion (RO) resources, and/or based on third information carried in the MSG 1, a MSG 3 or the MSG A sent by the terminal; and
configuring different groups of random access resources for different types of terminals; wherein
the third information is used to instruct the terminal type.

24. The method of claim 23, wherein before the third information carried in the MSG 1, the MSG 3 or the MSG A is sent by the terminal, the method further comprises:
sending fourth information to the terminal; wherein
the fourth information is used to instruct the terminal to report the third information through the MSG 1, the MSG 3 or the MSG A.

25. A communication apparatus, comprising:
a first receiving unit, configured to receive at least two groups of configurations sent by a base station; wherein
each of the at least two groups of configurations comprise carrier information or BWP information representing a carrier or a BWP configured by a network side for a specific terminal for a communication, a specific slice, or a specific service.

26. A communication apparatus, comprising:
a first sending unit, configured to send at least two groups of configurations; wherein
each of the at least two groups of configurations comprise carrier information or BWP information representing a carrier or a BWP configured by a network side for a specific terminal for a communication, a specific slice, or a specific service.

27. A terminal, comprising: a first processor and a first communication interface; wherein the first communication interface is configured to receive at least two groups of configurations sent by a base station; wherein
each of the at least two groups of configurations comprise carrier information or BWP information representing a carrier or a BWP configured by a network side for a specific terminal for a communication, a specific slice, or a specific service.

28. A base station, comprising: a second processor and a second communication interface; wherein
the second communication interface is configured to send at least two groups of configurations; wherein
each of the at least two groups of configurations comprise carrier information or BWP information representing a carrier or a BWP configured by a network side for a specific terminal for a communication, a specific slice, or a specific service.

29. A terminal, comprising: a first processor and a first memory for storing a computer program executable by the processor; wherein
the first processor is configured to perform the steps of the method of any one of claims 1-12 when running the computer programs.

30. A base station, comprising: a second processor and a second memory for storing a computer program executable by the processor; wherein
the second processor is configured to perform the steps of the method of any one of claims 13-24 when running the computer programs.

31. A storage medium having computer programs stored thereon, wherein when the computer programs are executed by a processor, the steps of the method of any one of claims 1-12 or the steps of the method of any one of claims 13-24 are implemented.
